# EUROPEAN PATENT APPLICATION

(11) **EP 4 390 626 A1**
(43) Date of publication of application: **26.06.2024**
(21) Application number: 22216164.8
(22) Date of filing: 22.12.2022
(51) Int. Cl.: G06F 3/01

(54) **APPARATUS, SYSTEM, METHOD AND COMPUTER PROGRAM FOR ANOMALY DETECTION**

(71) Applicant: Nokia Technologies Oy, 02610 Espoo (FI)
(72) Inventor: JOKELA, Tero Simo Ilari, 33820 Tampere (FI)
(74) Representative: Swindell & Pearson Limited

(57) **Abstract**

An apparatus comprising means for: for multiple users: obtaining eye-tracking data for at least one of: multiple times and multiple user locations; comparing the eye-tracking data for at least one of: the multiple times and the multiple user locations to identify a user-specific change with respect to at least one of time or user location; and automatically detecting an anomaly, comprising aggregating the user-specific changes to identify a user-independent change with respect to at least one of: time or location.

## Description

### TECHNOLOGICAL FIELD

Examples of the disclosure relate to an apparatus, system, method and computer program for anomaly detection. Some relate to an apparatus, system, method and computer program for anomaly detection based on eye-tracking data obtained for multiple users.

### BACKGROUND

A person's spatial familiarity in relation to their environment indicates their spatial knowledge and understanding of their environment such that a high level of spatial familiarity indicates a high level of spatial knowledge. Spatial knowledge and understanding can include knowledge about objects in the environment and their position in relation to an individual, as well as navigation information.

It is possible to detect a person's spatial familiarity from eye tracking data. Eye tracking data is data that depends upon changes of an eye. A small amount of data is sufficient for spatial familiarity detection.

Eye tracking data can, for example, be obtained using computer vision techniques which can identify, from sequences of visual images, changes at an eye such as movement, pupil dilation and blinking.

### BRIEF SUMMARY

According to various, but not necessarily all, examples there is provided an apparatus comprising means for: for multiple users: obtaining eye-tracking data for at least one of: multiple times and multiple user locations; comparing the eye-tracking data for at least one of: the multiple times and the multiple user locations to identify a user-specific change with respect to at least one of time or user location; and automatically detecting an anomaly, comprising aggregating the user-specific changes to identify a user-independent change with respect to at least one of: time or location.

In some but not necessarily all examples, the apparatus further comprises means for determining a state of a first location based on the detection of an anomaly.

In some but not necessarily all examples, determining the state of the first location based on the detection of an anomaly comprises: if the user-independent change is a change over time but not over location, determining that the state of the first location is a first location state; if the user-independent change is a change over location but not over time, determining that the state of the first location is a second location state; and if the user-independent change is a change over location and time, determining that the state of the first location is a third location state.

In some but not necessarily all examples, the apparatus further comprises means for creating an interrupt for an automatic telecommunication based on the state of the first location.

In some but not necessarily all examples, the eye-tracking data comprises eye-tracking input data and eye-tracking output data.

In some but not necessarily all examples, the apparatus further comprises means for processing the eye-tracking input data to obtain the eye-tracking output data.

In some but not necessarily all examples, processing the eye-tracking input data to obtain the eye-tracking output data comprises inputting at least the eye-tracking input data to a first machine learning classification algorithm.

In some but not necessarily all examples, processing the eye-tracking input data to obtain the eye-tracking output data further comprises inputting one or more of: a fatigue indicator of a respective one of the multiple users; an alcohol consumption indicator of a respective one of the multiple users; a mood indicator of a respective one of the multiple users; a GPS location of a respective one of the multiple users; historical GPS information of a respective one of the multiple users; or social media data of a respective one of the multiple users into the first machine learning algorithm.

In some but not necessarily all examples, the eye-tracking output data indicates whether respective ones of the multiple users are familiar or non-familiar with a location for which eye-tracking data has been obtained.

In some but not necessarily all examples, the eye tracking input data is at least one of: a fixation frequency; a saccade frequency; a fixation duration; a fixation dispersion; a saccade duration; a saccade amplitude; a saccade velocity; a blink duration; and a pupil diameter.

In some but not necessarily all examples, the apparatus further comprises means for performing eye-tracking of a first subset of the multiple users.

In some but not necessarily all examples, the apparatus further comprises means for obtaining eye-tracking data of a second subset of the multiple users.

According to various, but not necessarily all, examples there is provided a system comprising: the apparatus as described above; and at least one user device comprising means for: performing eye-tracking of respective ones of the multiple users; and providing the eye-tracking data to the apparatus.

According to various, but not necessarily all, examples there is provided a method comprising: for multiple users: obtaining eye-tracking data for at least one of: multiple times and multiple user locations; comparing the eye-tracking data for at least one of: the multiple times and the multiple user locations to identify a user-specific change with respect to at least one of time or to user location; and automatically detecting an anomaly, comprising aggregating the user-specific changes to identify a user-independent change with respect to at least one of: time and location.

According to various, but not necessarily all, examples there is provided a computer program comprising program instructions for causing an apparatus to perform at least: for multiple users: obtaining eye-tracking data for at least one of: multiple times and multiple user locations; comparing the eye-tracking data for at least one of: the multiple times and the multiple user locations to identify a user-specific change with respect to at least one of time or user location; and automatically detecting an anomaly, comprising aggregating the user-specific changes to identify a user-independent change with respect to at least one of: time and location.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example of the subject matter described herein;
FIG. 2 shows another example of the subject matter described herein;
FIGs 3A - 3B show another example of the subject matter described herein;
FIGs 4A - 4C show another example of the subject matter described herein;
FIGs 5A - 5C show another example of the subject matter described herein;
FIGs 6A - 6F show another example of the subject matter described herein;
FIGs 7A - 7F show another example of the subject matter described herein;
FIG. 8 shows another example of the subject matter described herein;
FIG. 9 shows another example of the subject matter described herein;
FIG. 10 shows another example of the subject matter described herein; and
FIG. 11 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

The following description relates to various examples of an apparatus 100 comprising:
means 102 for, for multiple users: obtaining eye-tracking data for at least one of:
multiple times and multiple user locations;
means 104 for, for multiple users: comparing the eye-tracking data for at least one of: the multiple times and the multiple user locations to identify a user-specific change with respect to at least one of time or user location; and
means 106 for automatically detecting an anomaly, comprising aggregating the user-specific changes to identify a user-independent change with respect to at least one of: time or location.

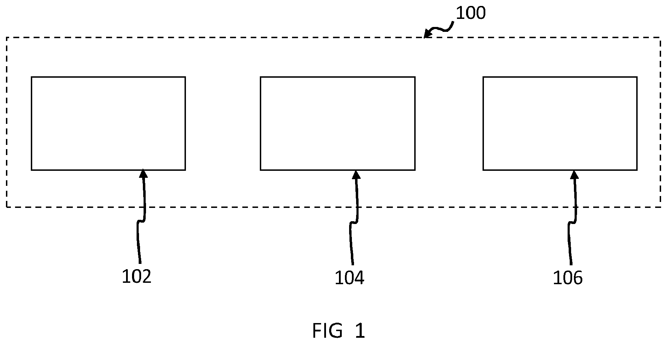

FIG 1 illustrates an example of an apparatus 100 for automatically detecting an anomaly based on eye-tracking data of multiple users.

The apparatus 100 comprises means 102 for, for multiple users: obtaining eye-tracking data for at least one of: multiple times and multiple user locations;

The apparatus 100 comprises means 104 for, for multiple users: comparing the eye-tracking data for at least one of: the multiple times and the multiple user locations to identify a user-specific change with respect to at least one of time or user location. The apparatus 100 comprises means 106 for automatically detecting an anomaly, comprising aggregating the user-specific changes to identify a user-independent change with respect to at least one of: time or location.

The apparatus 100 therefore obtains, on a per user basis, eye-tracking data for at least one of: multiple times and multiple user locations. It does this for multiple users.

The apparatus 100 compares, on a per user basis, the obtained eye-tracking data (the eye-tracking data for at least one of: the multiple times and the multiple user locations) to identify a user-specific change in the obtained eye-tracking data of the user with respect to at least one of time or user location. It does this for multiple users.

The apparatus 100 automatically detects an anomaly by aggregating, across multiple users, the user-specific changes to identify a user-independent change with respect to at least one of: time or location.

In examples, the means 102 for obtaining eye-tracking data for at least one of multiple times and multiple locations are means for directly obtaining eye-tracking data from a user, i.e., means for performing eye-tracking of the user. The means 102 for obtaining eye-tracking data may therefore be an eye-tracking device.

In examples, the means 102 for obtaining eye-tracking data comprise means for receiving eye-tracking data from another component of the apparatus or another apparatus. For example, eye-tracking of the user may be performed by another component of the apparatus or a different apparatus and transmitted to the means 102 for obtaining eye-tracking data. In examples, the means 102 for obtaining eye-tracking data comprise means for downloading eye-tracking data from a server.

In further examples, the means 102 for obtaining eye-tracking data comprises both means for performing eye-tracking of the user and means for receiving eye-tracking data from another component of the apparatus or a different apparatus. For example, the means 102 for obtaining eye-tracking data may perform eye-tracking of a first user and receive eye-tracking data for other users.

In examples, an eye-tracking datum relates to an individual user at an individual location and an individual time. Thus, eye-tracking data may be obtained for multiple users and/or for multiple locations and/or for multiple times. The eye-tracking data can be considered datum points in a three-dimensional space defined by the three dimensions: users, locations, times.

In some examples, eye-tracking data is obtained at discrete times. In other examples, eye-tracking data is obtained continuously such that data for the multiple users and/or the multiple locations and/or the multiple times is accumulated over time.

A location may refer to a physical or virtual space inhabited by an individual user or virtual user. In some examples, the location is a predetermined area with a first size. In other examples, the location is an area, centered on a user, with a first size. In further examples, the location is an estimated area that is visible to a user. Estimating the area that is visible to the user may comprise using information about any one or more of: objects and buildings; visibility conditions; and the user's position, orientation, and movement.

The type of location used to obtain eye-tracking data may be different to the type of location used to process the eye-tracking data. For example, when obtaining eye-tracking data from a user, the location may be considered as an estimated area that is visible to the user. When processing the eye-tracking data, the location may be considered as a predetermined area with a first size. Thus, data obtained from multiple users, who may or may not have the same area visible to them, but all of whom are within a predetermined area, may be used.

The location may further be defined by the eye-tracking data obtained from the multiple users. For example, if the eye-tracking data obtained from a user who is moving around a current location changes from a first type of eye-tracking data to a second type of eye-tracking data, a boundary of a location may be drawn at the position at which the eye-tracking data changed. However, if the eye-tracking data obtained from a user who is not moving changes from the first type of eye-tracking data to the second type of eye-tracking data, no boundary may be drawn.

In examples, a time refers to any one or more of an instantaneous time or a time period. The time may also be a null time, that is no eye-tracking data has been obtained for a user at a particular location.

In some examples, the eye-tracking data provides a familiarity measure of one or more users with one or more locations at one or more times.

The familiarity measure indicates a user's spatial knowledge and understanding of their environment such that a high familiarity measure indicates a high level of spatial knowledge. Spatial knowledge and understanding can include knowledge about objects in the environment and their position in relation to an individual, as well as navigation information.

In examples, the familiarity measure of the user with a first location at a first time, provided by the eye-tracking data, is a binary measure, that is it indicates whether the user is familiar or non-familiar with the first location at the first time. In other examples, the familiarity measure may have multiple discrete or continuous values.

In examples, the first type of eye-tracking data indicates a high familiarity level. A high familiarity level may indicate that a user has complete or near-complete understanding of their location. In other words, the user may remember their location and the objects within it. In examples, the user is therefore classified as a local.

In examples, the second type of eye-tracking data indicates a low familiarity level. A low familiarity level may indicate that a user has no or low understanding of their location. In other words, the user may not remember their location and the objects in it. Additionally or alternatively, a low familiarity level may indicate that the user is alert and/or surprised. For example, the user may have a good understanding and/or recognition of some aspects of their location but no or low understanding and/or recognition of other aspects of their location. For example, the user may be wary in a location they have visited many times, or there may have been some change in a location the user has visited many times. In examples, the user is therefore classified as a visitor or a wary local.

In some examples, the eye-tracking data comprises eye-tracking input data and eye-tracking output data.

Eye tracking data is data that depends upon changes of an eye. In some examples, eye tracking data is data that records movement (or non-movement) of an eye or a pupil of an eye or other changes such as pupil dilation, blinking etc. The eye-tracking input data may be raw data obtained from a user by an eye-tracking process; for example, the eye-tracking input data may be at least one of: a fixation frequency; a saccade frequency; a fixation duration; a fixation dispersion; a saccade duration; a saccade amplitude; a saccade velocity; a blink duration; and a pupil diameter.

The eye-tracking output data may be a familiarity measure for the user with a location at a first time as described above.

The eye-tracking input data may be processed to obtain the eye-tracking output data. For example, the eye-tracking input data may be inputted to a machine learning classification algorithm.

In examples, the machine-learning classification algorithm is trained by comparing eye-tracking data obtained from one or more users at one or more locations and at one or more times with self-reported familiarity measures from the one or more users. The machine-learning classification algorithm is therefore able to interpret various eye-tracking input data as being indicative of a level of familiarity.

Additional data may be input to the machine learning classification algorithm with the eye-tracking input data. For example, any one or more of: a fatigue indicator of the user; an alcohol consumption indicator of the user; a mood indicator of the user; a GPS location of the user; historical GPS location of the user; or social media data of the user may be input into the first machine learning algorithm.

The additional data may affect an apparent familiarity of the user. For example, if the historical GPS location of the user indicates that the user has never visited the location before, the user may be likely to be less familiar or unfamiliar with the location. For example, if the alcohol consumption indicator of the user indicates that the user has consumed alcohol, the user may appear to be unfamiliar with the location, even if they have visited the location before. Further, it may be, for example, that the user has been in the location before but did not have a device recording their location or did not pay attention to the location.

Therefore, by inputting the additional data to the machine learning classification algorithm, the machine learning classification algorithm may mitigate the effect of factors that may falsely indicate familiarity or non-familiarity, such as tiredness causing the user to appear non-familiar with a location when they are in fact familiar with the location. Thus, a more complete understanding of the user's familiarity level may be obtained.

The eye-tracking output data thus is affected by information in the user's memory and physiology and so represents a complete and accurate measure of the user's familiarity with the location.

Processing the eye-tracking input data to obtain eye-tracking output data may be carried out by the apparatus 100 or by another device. For example, the processing may be carried out by a remote server or by a user device.

The apparatus further comprises means 104 for comparing the obtained eye-tracking data for at least one of the multiple times and the multiple locations to identify a user-specific change with respect to at least one of time or user location.

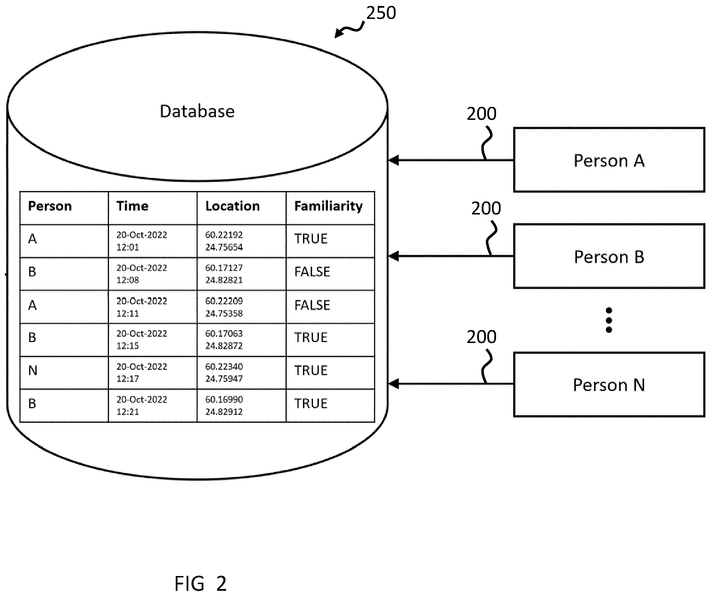

FIG. 2 illustrates an example a method performed by the means 104 for comparing the obtained eye-tracking data. Eye-tracking data 200 obtained for one or more users at one or more locations at one or more times is input to a database 250. The database 250 may therefore comprise records that include a user's identity, timestamp, location, and familiarity with the location.

Eye-tracking data 200 for individual ones of the multiple users, for at least one of the multiple locations or the multiple times, may be obtained from the database. Alternatively, the eye-tracking data 200 for individual ones of the multiple users may be obtained from a different source, such as eye-tracking equipment.

The eye-tracking data 200 for the individual ones of the multiple users is compared to identify a user-specific change with respect to at least one of time or user location.

For example, the eye-tracking data 200 of an individual user (only) for a first location (only) may be compared across multiple times to detect a user-specific change with respect to time in the first location.

For example, the eye-tracking data 200 of an individual user (only) for multiple locations may be compared across a first time period (only) and multiple locations to detect a user-specific change with respect to location in the first time period.

For example, the eye-tracking data 200 of an individual user (only) for multiple locations may be compared across multiple times and multiple locations to detect a user-specific change with respect to time and location.

In this way, user-specific changes for multiple ones of the multiple users are detected.

The apparatus further comprises means 106 for automatically detecting an anomaly, comprising aggregating the user-specific changes to identify a user-independent change with respect to at least one of: time or location.

The user-specific comparison provides user-specific evidence that is aggregated to provide user-independent evidence.

In some examples, if a sufficient number of the multiple users indicate user-specific changes with respect to time in the first location, it is determined that a user-independent change occurs with respect to time in the first location and thus that a first type of anomaly has occurred. The sufficient number can, for example, be a number above a threshold.

For example, if a sufficient number of the multiple users indicate user-specific changes with respect to location in the first time period, it is determined that a user-independent change occurs with respect to location in the first time period and thus that a second type of anomaly has occurred. The sufficient number can, for example, be a number above a threshold.

For example, if a sufficient number of the multiple users indicate user-specific changes with respect to time and location, it is determined that a user-independent change occurs with respect to time and location and thus that a third type of anomaly has occurred. The sufficient number can, for example, be a number above a threshold.

For example, if a sufficient number of the multiple users indicate user-specific changes with respect to time such that the eye-tracking value changes from a null type (i.e., no data) to the first or second type, it may be determined that a user-independent change occurs with respect to time such that the eye-tracking value changes from the null type to the first or second type, and thus that a fourth type of anomaly has occurred. The sufficient number can, for example, be a number above a threshold.

The detection of an anomaly that is based on identifying a user-independent change may mitigate for user-specific anomalies.

In some but not necessarily all examples, the anomaly detection requires that a subset of the multiple users comprises at least a threshold number of the multiple users for a user-independent anomaly to be detected. For example, the subset may be 100% or 80% of the multiple users.

In some but not necessarily all examples, the anomaly detection may determine a weighted average from the user-specific changes. For example, more weight may be given to recent data than to data from previous time periods.

The comparison of eye-tracking data 200 and/or the detection of an anomaly may be carried out in real time.

Based on the user-independent change and/or the detection of the anomaly, a state of at least a first location may be determined.

For example, if the user-independent change is a change over time but not over location (the first type of anomaly has occurred), the state of the first location may be identified as a first location state.

In examples, the first location state is a recent change state. For example, an unusual situation, a change, or an event may have occurred in the first location that makes users who are typically familiar with the first location suddenly unfamiliar with the first location. This may include, for example, traffic accidents; changes in traffic routes such as road closures; new buildings; or crimes.

For example, if the user-independent change is a change over location but not over time (the second type of anomaly has occurred), the state of the first location may be identified as a second location state.

In examples, the second location state is a danger state. For example, for many users who are typically familiar with locations surrounding the first location, the obtained eye-tracking data consistently indicates that the users are not familiar with the first location. The user-independent change is a change from the first type of eye-tracking data in surrounding locations to the second type of eye-tracking data in the first location. This may suggest that those users who are typically familiar with locations surrounding the first location consistently become alert in the first location. This may indicate, for example, that the first location is a dangerous area or an area with high levels of variation, for example heavy traffic.

For example, if the user-independent change is a change over location and time (the third type of anomaly has occurred), the state of the first location may be identified as a third location state. In examples, the third location state is an ongoing change location state.

For example, if the user-independent change is a change over time such that the eye-tracking data 200 changes from the null type to the first or second type (the fourth type of anomaly has occurred), the state of the first location may be identified as a fourth location state.

In examples, the fourth location state is a visitor state. For example, many users who have never visited the first location may visit the first location.

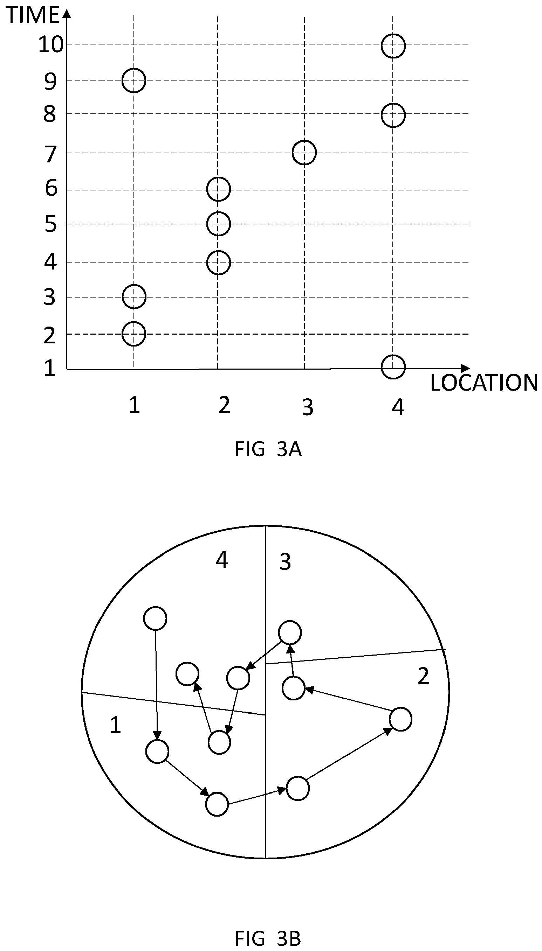

FIGs 3 - 7 illustrate various examples of the apparatus 100, in particular the comparison of eye-tracking data 200 and the aggregation of user-specific changes.

FIGs 3A and 3B illustrate movement of a first user between four different locations. FIG 3B illustrates a bird's eye view of the movement of the first user. FIG 3A illustrates the location of the first user (x-axis) with respect to time (y-axis). It can be seen that, at each of times 1 - 10, the first user was in any one of locations 1, 2, 3 or 4. Precisely, the first user was at location 4 at time 1; location 1 at time 2 and time 3; location 2 at time 4, 5 and 6; location 3 at time 7; location 4 at time 8; location 1 at time 9; and location 4 at time 10.

In the example of FIGs 3A and 3B, eye-tracking data 200 is obtained from the first user at each of locations 1 to 4 and each of times 1 to 10. Thus, the circles in FIG 3A represent eye-tracking data 200 of the first user.

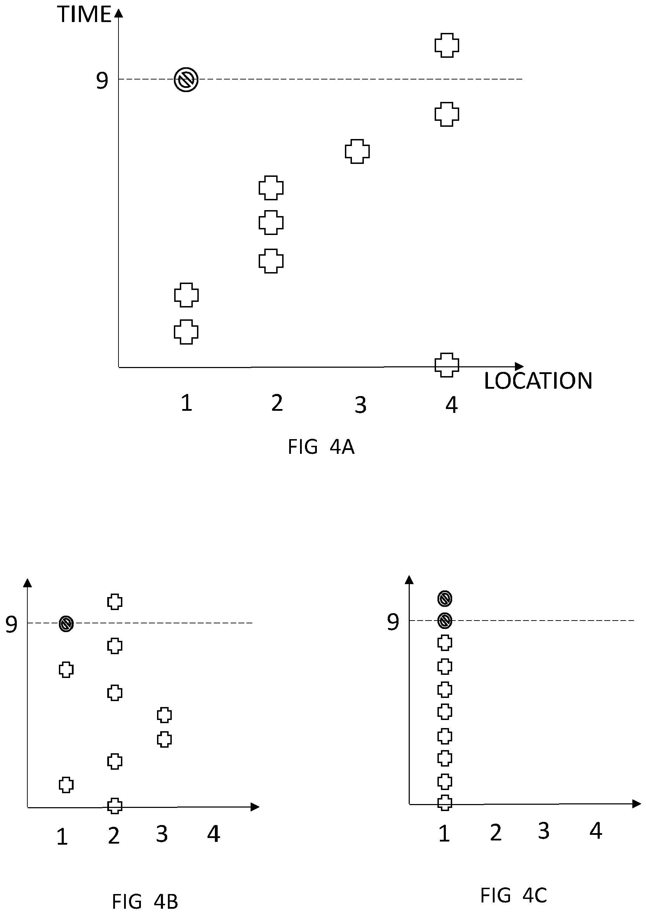

FIGs 4 - 6 illustrate example use cases of the eye-tracking data 200 obtained from the first user and from other ones of the multiple users. In the examples of FIGs 4 - 6, a "plus" sign 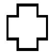 indicates a first type of eye-tracking data 200, for example eye-tracking data that indicates a user is familiar with the location, and a "negative" sign 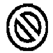 indicates a second type of eye-tracking data 200, for example eye-tracking data that indicates a user is non-familiar with the location. No sign indicates a null type of eye-tracking data 200, that is no eye-tracking data has been obtained from the user at a location at a time. In all of FIGs 4 to 6, the x-axis represents location (1 -4) and the y-axis represents time (1 - 10).

FIGs 4A to 4C illustrate a first example use case of the eye-tracking data 200 obtained from the first user and other users. It can be seen from FIG 4A that the first type of eye-tracking data is obtained for the first user at times 1 to 8 and 10. However, the second type of eye-tracking data is obtained for the first user at time 9.

The eye-tracking data 200 obtained for the first user at times 1 to 10 and locations 1 to 4 is compared. Based on the compared eye-tracking data 200, it may be identified that there is a user-specific change in the eye-tracking data 200 with respect to time but not to location. That is, the obtained eye-tracking data 200 for location 1 at time 9 is different to the obtained eye-tracking data 200 for location 1 at other times.

The eye-tracking data 200 obtained for other ones of the multiple users may then be compared to identify further user-specific changes in the eye-tracking data 200. Examples of movements and eye-tracking data 200 for a second user and a third user are illustrated in FIGs 4B and 4C respectively. Based on the eye-tracking data 200, it may be identified that there is a user-specific change for each of the second user and the third user with respect to time but not to location.

In these examples, the user-specific changes in the eye-tracking data 200 are a change into the second type of eye-tracking data. In these examples, the user-specific changes in the eye-tracking data 200 are a change into the second type of eye-tracking data from the first type of eye-tracking data.

Based on this, the first type of anomaly may be detected at location 1 at time 9 by aggregating the multiple user-specific changes to identify a user-independent change at location 1 at time 9. In this example, there are three users all of which have a user-specific change at location 1 at time 9. There is a sufficient number of such users or sufficient percentage of such users to reliably determine that the user-specific change is a user-independent change (an anomaly).

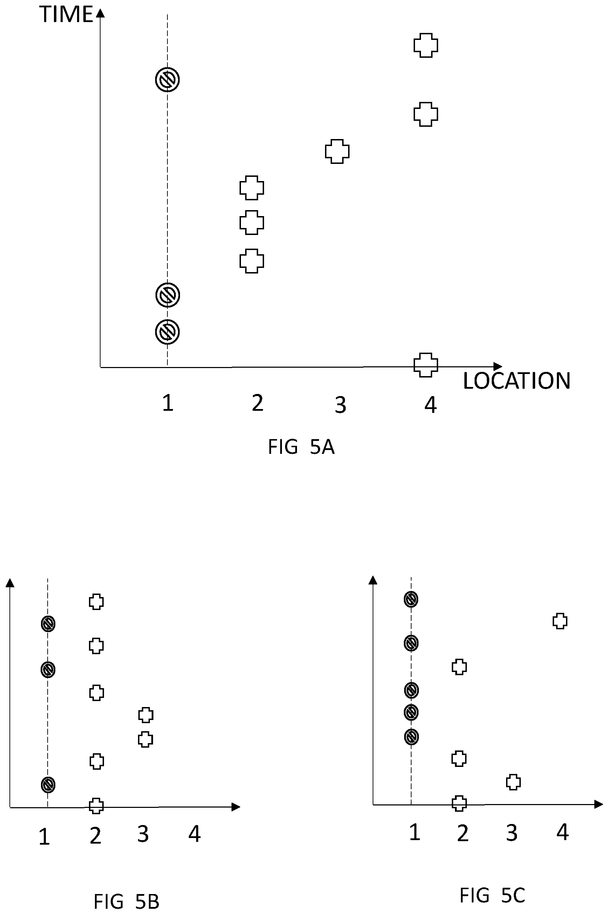

FIGs 5A to 5C illustrate a second example use case of the eye-tracking data 200 obtained from the first user and other users. It can be seen from FIG 5A that the first type of eye-tracking data 200 is obtained for the first user at locations 2 to 4. However, the second type of eye-tracking data 200 is obtained for the first user at location 1.

The eye-tracking data 200 obtained for the first user at times 1 to 10 and locations 1 to 4 is compared. Based on the compared eye-tracking data 200, it may be identified that there is a user-specific change in the eye-tracking data 200 with respect to location but not to time. That is, the obtained eye-tracking data 200 for location 1 at all obtained times is different to the obtained eye-tracking data 200 for locations 2 to 4 at all obtained times.

The eye-tracking data 200 obtained for other ones of the multiple users may then be compared to identify further user-specific changes in the eye-tracking data 200. Examples of movements and eye-tracking data 200 for a second user and a third user are illustrated in FIGs 5B and 5C respectively. Based on the eye-tracking data 200, it may be identified that there is a user-specific change for each of the second user and the third user with respect to location but not to time.

Based on this, the second type of anomaly may be detected at location 1 at all times by aggregating the multiple user-specific changes to identify a user-independent change at location 1 at all times. In this example, there are three users all of which have a user-specific change between location 1 and other adjacent locations. There is a sufficient number of such users or sufficient percentage of such users to reliably determine that the user-specific change is a user-independent change (an anomaly).

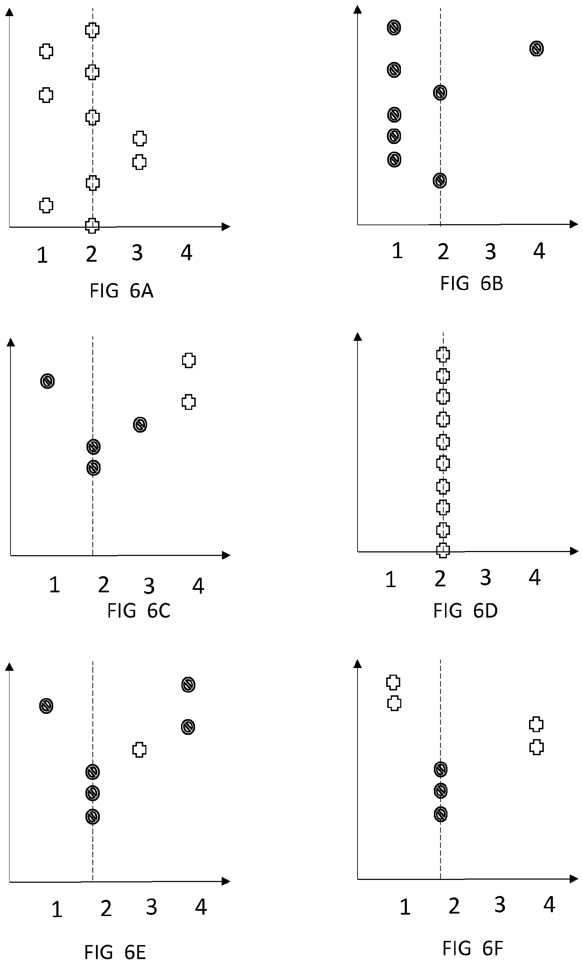

FIGs 6A to 6F illustrate a third example use case of eye-tracking data 200 obtained from multiple users. Each of FIGs 6A to 6F records spatial-temporal eye-tracking data 200 for a different user.

It can be seen that the first type of eye-tracking data ("plus") and the second type of eye tracking data ("negative") are obtained for the users at some times, and a null type of eye-tracking data 200 (i.e., no eye-tracking data 200) is obtained for the users at other times.

In these examples, the user-specific changes in the eye-tracking data 200 include a change into the second non-familiar state. In these examples, the user-specific changes in the eye-tracking data 200 include changes into the second type of eye-tracking data from the first type of eye-tracking data and include changes into the second type of eye-tracking data from the null type of eye-tracking data. Changes between the first type of eye-tracking data and the second type of eye-tracking data are also visible in FIGs 6C, 6E and 6F. In examples, these changes are aggregated and interpreted as described above.

FIG 6A illustrates movement and eye-tracking data 200 of a first user. The first type of eye-tracking data 200 is obtained for the first user at all of locations 1 to 4 and at all of times 1 to10. There is no user-specific change over time or location in the eye-tracking data 200 of the first user.

Fig 6B illustrates movement and eye-tracking data 200 of a second user. The null type of eye-tracking data 200 is obtained for the second user at times 1 to 2. The second type of eye-tracking data 200 is obtained for the second user at locations 1, 2 and 4 and at all of times 3 to 10. There is a user-specific change over time in at least location 2 such that the eye-tracking data 200 changes from the null type to the second type of eye-tracking data 200 between time 2 and time 3.

FIG 6C illustrates movement and eye-tracking data 200 of a third user. The null type of eye-tracking data 200 is obtained for the third user at times 1 to 4. The first type of eye-tracking data 200 is obtained for the third user at location 4. The second type of eye-tracking data 200 is obtained for the third user at locations 1-3. There is a user-specific change over time in at least location 2 such that the eye-tracking data 200 changes from the null type to the second type of eye-tracking data 200.

FIG 6D illustrates movement and eye-tracking data 200 of a fourth user. The first type of eye-tracking data 200 is obtained for the fourth user at location 2 at all of times 1 to 10. There is no user-specific change over time or location in the eye-tracking data 200 of the fourth user.

FIG 6E illustrates movement and eye-tracking data 200 of a fifth user. The null type of eye-tracking data 200 is obtained for the fifth user at times 1 to 3. The first type of eye-tracking data 200 is obtained for the fifth user at location 3. The second type of eye-tracking data 200 is obtained for the fifth user at locations 1, 2 and 4. There is a user-specific change over time in at least location 2 such that the eye-tracking data 200 changes from the null type to the second type of eye-tracking data 200.

FIG 6F illustrates movement and eye-tracking of a sixth user. The null type of eye-tracking data 200 is obtained for the sixth user at times 1 to 3. The first type of eye-tracking data 200 is obtained for the sixth user at locations 1 and 4. The second type of eye-tracking data 200 is obtained for the sixth user at locations 2 and 3. There is a user-specific change over time in at least location 2 such that the eye-tracking data 200 changes from the null type to the second type of eye-tracking data 200.

Focusing on the user-specific changes in the eye-tracking data 200 that are a change into the second non-familiar state from the null type, then there are four users (FIGs 6B, 6C, 6E, 6F) with such user-specific changes between location 2 and other adjacent locations.

Based on this, the fourth type of anomaly may be detected at location 2 by aggregating the multiple user-specific changes to identify a user-independent change at location 2 such that the eye-tracking data 200 changes from the null type to the second type of eye-tracking data 200. In this example, there are four users (FIGs 6B, 6C, 6E, 6F) which have a user-specific change between location 2 and other adjacent locations. There is a sufficient number of such users or sufficient percentage of such users to reliably determine that the user-specific change is a user-independent change (an anomaly). In this case the anomaly of the switch from null type to second non-familiar state in association with location 2.

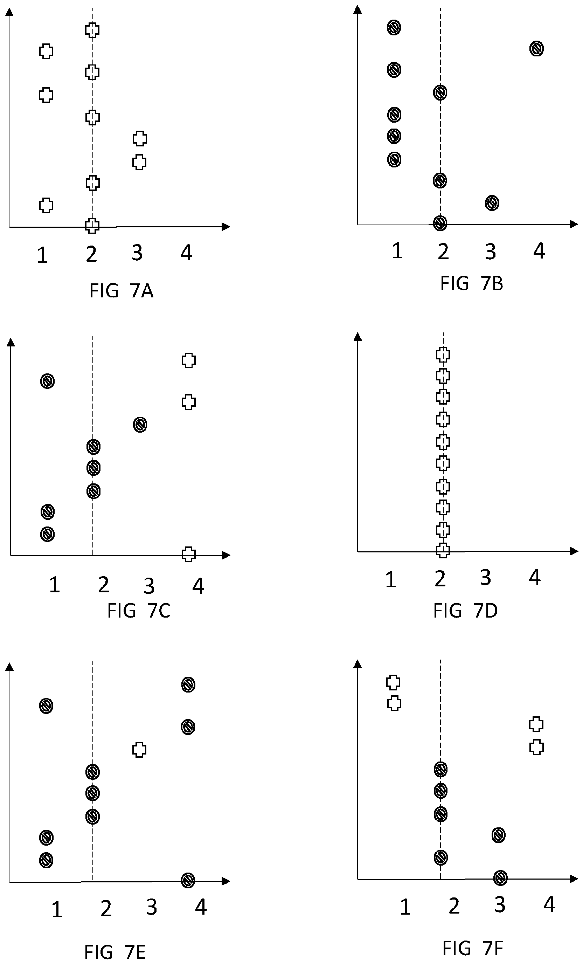

FIGs 7A to 7F illustrate a fourth example use case of eye-tracking data 200 obtained from multiple users. It can be seen that at least one of the first type of eye-tracking data 200 or the second type of eye tracking data are obtained for the users at all times.

FIG 7A illustrates movement and eye-tracking data 200 of a first user. The first type of eye-tracking data 200 is obtained for the first user at all of locations 1 to 4 and at all of times 1 to10.

Fig 7B illustrates movement and eye-tracking data 200 of a second user. The second type of eye-tracking data 200 is obtained for the second user at all of locations 1 to 4 and at all of times 1 to 10.

FIG 7C illustrates movement and eye-tracking data 200 of a third user. The first type of eye-tracking data 200 is obtained for the third user at location 4. The second type of eye-tracking data 200 is obtained for the third user at locations 1 to 3.

FIG 7D illustrates movement and eye-tracking data 200 of a fourth user. The first type of eye-tracking data 200 is obtained for the fourth user at location 2 at all of times 1 to 10.

FIG 7E illustrates movement and eye-tracking data 200 of a fifth user. The first type of eye-tracking data 200 is obtained for the fifth user at location 3. The second type of eye-tracking data 200 is obtained for the fifth user at locations 1, 2 and 4.

FIG 7F illustrates movement and eye-tracking data 200 of a sixth user. The first type of eye-tracking data 200 is obtained for the sixth user at locations 1 and 4. The second type of eye-tracking data 200 is obtained for the sixth user at locations 2 and 3.

Focusing on location 2, it can be seen that the first type of eye-tracking data 200 is obtained for the first user and the fourth user. The first user and the fourth user may thus be classified as locals of location 2.

It can further be seen that the second type of eye-tracking data 200 is obtained for the second, third, fifth and sixth users at location 2. The second, third, fifth and sixth users may thus be classified as visitors of location 2.

Based on a high number of visitors, for example above a threshold number of visitors, location 2 may thus be classified as a visitor area. It will be appreciated that the opposite is also true, i.e., if there were a high number of locals, location 2 could be classified as a local area.

In examples, the apparatus 100 comprises means for providing an output based at least on the detected anomaly. The output may further be based on the determined state of at least the first location.

In examples, the output is an interrupt for an automatic telecommunication.

Thus, if the detected type of anomaly is the first type of anomaly and/or the detected state of the first location is the first state, the output may be a first output.

Thus, if the detected type of anomaly is the second type of anomaly and/or the detected state of the first location is the second state, the output may be a second output.

Thus, if the detected type of anomaly is the third type of anomaly and/or the detected state of the first location is the third state, the output may be a third output.

Thus, if the detected type of anomaly is the fourth type of anomaly and/or the detected state of the first location is the fourth state, the output may be a fourth output.

One or more of the first, second, third and fourth outputs may comprise the same output. One or more of the first, second, third and fourth outputs may comprise different outputs.

In examples, the output is an alert. Examples of the alert include: a security alert provided to an individual or group; a warning that the first location is dangerous; or a warning that an unusual event has occurred at the first location.

The alert may be provided to any one or more of: users approaching the first location; users already in the first location; users previously or currently identified as unfamiliar with the first location; emergency services; local businesses including surveillance and security providers; GPS, traffic and other location services; or news providers.

In examples, the apparatus 100 comprises means for performing eye-tracking of a first subset of the multiple users. The first subset may comprise any number of the multiple users, including no multiple users or all the multiple users.

In examples, the apparatus 100 comprises means for obtaining eye-tracking data 200 of a second subset of the multiple users. The second subset may comprise any number of the multiple users, including no multiple users or all the multiple users.

In examples, the apparatus 100 forms part of a system 800 which additionally comprises at least one user device 850 comprising means for:
performing eye-tracking of respective ones of the multiple users; and
providing the eye-tracking data to the apparatus.

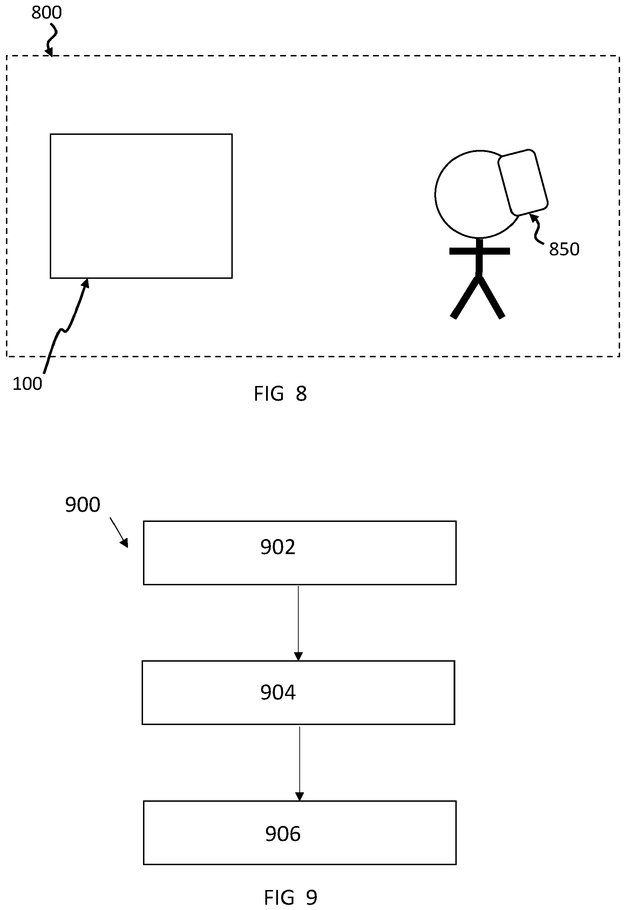

FIG. 8 illustrates an example system 800 comprising the apparatus 100 and one user device 850. It will be appreciated that more user devices 850 may form part of the system 800.

In the example illustrated by FIG. 8, the user device 850 obtains eye-tracking data 200 from a user. The eye-tracking data 200 may be received directly or indirectly by the means for obtaining eye-tracking data 200 of the apparatus 100. For example, the eye-tracking data 200 may be uploaded to a remote server and downloaded by the apparatus 100.

In this way, eye-tracking data 200 may be obtained from multiple users and received directly or indirectly by the means for obtaining eye-tracking data 200. This allows for the aggregation of the multiple users' eye-tracking data 200 and thus detection of an anomaly.

Examples of apparatuses and devices capable of performing eye tracker of respective ones of the multiple users include AR and VR headsets; smartphones; tablets; computers; smartwatches; and smart cars.

The apparatus 100 and/or the system may also be used in cases where the multiple users are interacting with virtual worlds. In such examples, the functionality of the apparatus 100 and/or the system is as described above, the users are virtual users and the locations are virtual locations.

FIG 9 illustrates an example of a method 900 comprising:
At block 902: for multiple users: obtaining eye-tracking data for at least one of: multiple times and multiple user locations;
At block 904: for multiple users: comparing the eye-tracking data for at least one of: the multiple times and the multiple user locations to identify a user-specific change with respect to time or with respect to user location; and
At block 906: automatically detecting an anomaly, comprising aggregating the user-specific changes to identify a user-independent change with respect to at least one of: time or location.

It will be appreciated from the foregoing that there can be provided an apparatus 100 comprising:
means 102 for, for multiple users: obtaining eye-tracking data for at least one of:
multiple times and multiple user locations;
means 104 for, for multiple users: and comparing the eye-tracking data for at least one of: the multiple times and the multiple user locations to identify a user-specific change with respect to at least one of time or user location; and
means 106 for automatically detecting an anomaly, comprising aggregating the user-specific changes to identify a user-independent change with respect to at least one of: time or location.

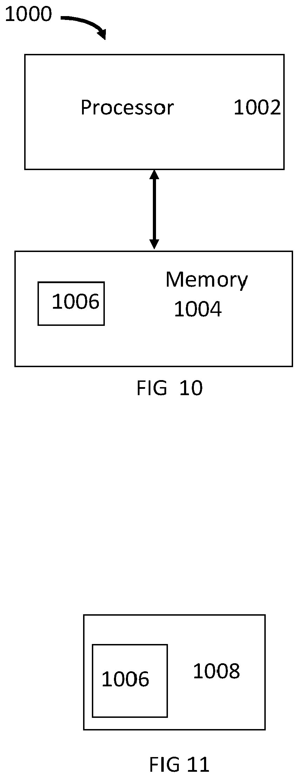

Fig 10 illustrates an example of a controller 1000 suitable for use in an apparatus 100. Implementation of a controller 1000 may be as controller circuitry. The controller 1000 may be implemented in hardware alone, have certain aspects in software including firmware alone or can be a combination of hardware and software (including firmware).

As illustrated in Fig 10 the controller 1000 may be implemented using instructions that enable hardware functionality, for example, by using executable instructions of a computer program 1006 in a general-purpose or special-purpose processor 1002 that may be stored on a computer readable storage medium (disk, memory etc) to be executed by such a processor 1002.

The processor 1002 is configured to read from and write to the memory 1004. The processor 1002 may also comprise an output interface via which data and/or commands are output by the processor 1002 and an input interface via which data and/or commands are input to the processor 1002.

The memory 1004 stores a computer program 1006 comprising computer program instructions (computer program code) that controls the operation of the apparatus 100 when loaded into the processor 1002. The computer program instructions, of the computer program 1006, provide the logic and routines that enables the apparatus to perform the methods illustrated in the accompanying Figs. The processor 1002 by reading the memory 1004 is able to load and execute the computer program 1006.

The apparatus 100 comprises:
at least one processor 1002; and
at least one memory 1004 including computer program code
the at least one memory 1004 and the computer program code configured to, with the at least one processor 1002, cause the apparatus 100 at least to perform:
   for multiple users:
      obtaining eye-tracking data for at least one of: multiple times and multiple user locations;
      comparing the eye-tracking data for at least one of: the multiple times and or the multiple user locations to identify a user-specific change with respect to time or with respect to user location; and
   automatically detecting an anomaly, comprising aggregating the user-specific changes to identify a user-independent change with respect to at least one of: time and location.

The apparatus 100 comprises:
at least one processor 1002; and
at least one memory 1004 including computer program code,
the at least one memory storing instructions that, when executed by the at least one processor 1002, cause the apparatus at least to:
   for multiple users:
      obtain eye-tracking data for at least one of: multiple times and multiple user locations;
      compare the eye-tracking data for at least one of: the multiple times and or the multiple user locations to identify a user-specific change with respect to time or with respect to user location; and
   automatically detect an anomaly, comprising aggregating the user-specific changes to identify a user-independent change with respect to at least one of: time and location.

As illustrated in Fig 11, the computer program 1006 may arrive at the apparatus 100 via any suitable delivery mechanism 1008. The delivery mechanism 1008 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 1006. The delivery mechanism may be a signal configured to reliably transfer the computer program 1006. The apparatus 100 may propagate or transmit the computer program 1006 as a computer data signal.

Computer program instructions for causing an apparatus to perform at least the following or for performing at least the following:
for multiple users:
   obtaining eye-tracking data for at least one of: multiple times and multiple user locations;
   comparing the eye-tracking data for at least one of: the multiple times and or the multiple user locations to identify a user-specific change with respect to time or with respect to user location; and
automatically detecting an anomaly, comprising aggregating the user-specific changes to identify a user-independent change with respect to at least one of: time and location.

The computer program instructions may be comprised in a computer program, a non-transitory computer readable medium, a computer program product, a machine readable medium. In some but not necessarily all examples, the computer program instructions may be distributed over more than one computer program.

Although the memory 1004 is illustrated as a single component/circuitry it may be implemented as one or more separate components/circuitry some or all of which may be integrated/removable and/or may provide permanent/semi-permanent/ dynamic/cached storage.

Although the processor 1002 is illustrated as a single component/circuitry it may be implemented as one or more separate components/circuitry some or all of which may be integrated/removable. The processor 1002 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 1006. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

In some but not necessarily all examples, the apparatus 100 is configured to communicate data from the apparatus 100 with or without local storage of the data in a memory 1004 at the apparatus 100 and with or without local processing of the data by circuitry or processors at the apparatus 100.

The data may, for example, be eye-tracking data obtained directly or indirectly from the user. The eye-tracking data may be eye-tracking data, eye-tracking input data and/or eye tracking output data.

The data may be stored in processed or unprocessed format remotely at one or more devices. The data may be stored in the Cloud.

The data may be processed remotely at one or more devices. The data may be partially processed locally and partially processed remotely at one or more devices.

The data may be communicated to the remote devices wirelessly via short range radio communications such as Wi-Fi or Bluetooth, for example, or over long-range cellular radio links. The apparatus may comprise a communications interface such as, for example, a radio transceiver for communication of data.

The apparatus 100 may be part of the Internet of Things forming part of a larger, distributed network.

The processing of the data, whether local or remote, may be for the purpose of health monitoring, data aggregation, patient monitoring, vital signs monitoring or other purposes.

The processing of the data, whether local or remote, may involve artificial intelligence or machine learning algorithms. The data may, for example, be used as learning input to train a machine learning network or may be used as a query input to a machine learning network, which provides a response. The machine learning network may for example use linear regression, logistic regression, vector support machines or an acyclic machine learning network such as a single or multi hidden layer neural network.

The processing of the data, whether local or remote, may produce an output. The output may be communicated to the apparatus 100 where it may produce an output sensible to the subject such as an audio output, visual output or haptic output.

The recording of data may comprise only temporary recording, or it may comprise permanent recording or it may comprise both temporary recording and permanent recording, Temporary recording implies the recording of data temporarily. This may, for example, occur during sensing or image capture, occur at a dynamic memory, occur at a buffer such as a circular buffer, a register, a cache or similar. Permanent recording implies that the data is in the form of an addressable data structure that is retrievable from an addressable memory space and can therefore be stored and retrieved until deleted or over-written, although long-term storage may or may not occur. The use of the term 'capture' in relation to an image relates to temporary recording of the data of the image. The use of the term 'store' in relation to an image relates to permanent recording of the data of the image.

The systems, apparatus, methods and computer programs may use machine learning which can include statistical learning. Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', `can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
for multiple users:
obtaining eye-tracking data for at least one of: multiple times and multiple user locations;
comparing the eye-tracking data for at least one of: the multiple times and the multiple user locations to identify a user-specific change with respect to at least one of time or user location; and
automatically detecting an anomaly, comprising aggregating the user-specific changes to identify a user-independent change with respect to at least one of: time or location.

2. An apparatus as claimed in claim 1, further comprising means for determining a state of a first location based on the detection of an anomaly.

3. An apparatus as claimed in claim 2, wherein determining the state of the first location based on the detection of an anomaly comprises:
if the user-independent change is a change over time but not over location, determining that the state of the first location is a first location state;
if the user-independent change is a change over location but not over time, determining that the state of the first location is a second location state; and
if the user-independent change is a change over location and time, determining that the state of the first location is a third location state.

4. An apparatus as claimed in claim 2 or claim 3, further comprising means for creating an interrupt for an automatic telecommunication based on the state of the first location.

5. An apparatus as claimed in any preceding claim, wherein the eye-tracking data comprises eye-tracking input data and eye-tracking output data.

6. An apparatus as claimed in claim 5, further comprising means for processing the eye-tracking input data to obtain the eye-tracking output data.

7. An apparatus as claimed in claim 6, wherein processing the eye-tracking input data to obtain the eye-tracking output data comprises inputting at least the eye-tracking input data to a first machine learning classification algorithm.

8. An apparatus as claimed in claim 7, wherein processing the eye-tracking input data to obtain the eye-tracking output data further comprises inputting one or more of: a fatigue indicator of a respective one of the multiple users; an alcohol consumption indicator of a respective one of the multiple users; a mood indicator of a respective one of the multiple users; a GPS location of a respective one of the multiple users; historical GPS information of a respective one of the multiple users; or social media data of a respective one of the multiple users into the first machine learning algorithm.

9. An apparatus as claimed in any of claims 5 to 8, wherein the eye-tracking output data indicates whether respective ones of the multiple users are familiar or non-familiar with a location for which eye-tracking data has been obtained.

10. An apparatus as claimed in any of claims 5 to 9, wherein the eye tracking input data is at least one of: a fixation frequency; a saccade frequency; a fixation duration; a fixation dispersion; a saccade duration; a saccade amplitude; a saccade velocity; a blink duration; and a pupil diameter.

11. An apparatus as claimed in any preceding claim, further comprising means for performing eye-tracking of a first subset of the multiple users.

12. An apparatus as claimed in claim 11, further comprising means for obtaining eye-tracking data of a second subset of the multiple users.

13. A system comprising:
the apparatus of any of claims 1 - 10; and
at least one user device comprising means for:
performing eye-tracking of respective ones of the multiple users; and providing the eye-tracking data to the apparatus.

14. A method comprising:
for multiple users:
obtaining eye-tracking data for at least one of: multiple times and multiple user locations;
comparing the eye-tracking data for at least one of: the multiple times and the multiple user locations to identify a user-specific change with respect to at least one of time or to user location; and
automatically detecting an anomaly, comprising aggregating the user-specific changes to identify a user-independent change with respect to at least one of: time and location.

15. A computer program comprising program instructions for causing an apparatus to perform at least:
for multiple users:
obtaining eye-tracking data for at least one of: multiple times and multiple user locations;
comparing the eye-tracking data for at least one of: the multiple times and the multiple user locations to identify a user-specific change with respect to at least one of time or user location; and
automatically detecting an anomaly, comprising aggregating the user-specific changes to identify a user-independent change with respect to at least one of: time and location.
